# EUROPEAN PATENT APPLICATION

(11) **EP 2 708 479 A2**
(43) Date of publication of application: **19.03.2014**
(21) Application number: 12782254.2
(22) Date of filing: 04.05.2012
(51) Int. Cl.: B65G 47/91, B25J 15/06, B23Q 3/08

(54) **DEVICE FOR VACUUM GRIPPING**

(30) Priority: 09.05.2011 KR 20110043369
(71) Applicant: Korea Pneumatic System Co., Ltd, Seoul 153-817 (KR)
(72) Inventor: CHO, Ho-Young, Gangseo-gu, Seoul 157-755 (KR)
(74) Representative: Chaillot, Geneviève
(86) International application number: PCT/KR2012/003505
(87) International publication number: WO 2012/153944

(57) **Abstract**

Disclosed is a device for vacuum gripping that may be used in a vacuum transfer system. The vacuum gripping device includes a supply passage extending from the lower end of the sidewall of a gripper body having a discharge passage therein to a suction hole provided below the lower end of the discharge passage. Further, an air guide is mounted to the lower end of the gripper body. The air guide is designed to move compressed air only upward from the lower part of the discharge passage by providing a rounded structure (R) in the supply passage. Thus, the vacuum gripping device of this invention can prevent even a small amount of compressed air from undesirably flowing to a suction pad part placed in a lower part of the vacuum gripping device, so the gripping device can quickly and efficiently vacuum-hold an object.

## Description

### Technical Field

The present invention relates, in general, to a device for vacuum gripping and, more particularly, to a gripping device used in a vacuum transfer system.

### Background Art

Generally, a vacuum transfer system is a system in which air is exhausted from the interior space of a gripping device along with compressed air supplied to the device at a high speed, thereby producing a vacuum via negative pressure in the interior space of the gripping device. When an object is held by the gripping device due to the negative pressure, the system moves the object to a desired place by operation of a robotic mechanism. The present invention relates to a vacuum gripping device used in the system.

Typically, the vacuum gripping device includes a gripper body having a channel in the center, and a suction pad having an air exhaust space therein. The suction pad is mounted to the lower end of the gripper body, in which the channel communicates with the air exhaust space. In the vacuum transfer system, a vacuum ejector pump is connected to the channel, so, when compressed air supplied at a high speed passes through the pump, air that has been charged in the air exhaust space is expelled to the outside via both the channel and the pump.

The above-mentioned vacuum gripping device may be used in a single type or a combination type according to conditions of the object to be vacuum-gripped. Here, the vacuum gripping device is advantageous in that the device can provide high gripping-power. However, to use the related art vacuum gripping device, it is required to use an additional ejector pump, so the related art vacuum gripping device is problematic in that the device complicates the manufacturing process and the operation of the system.

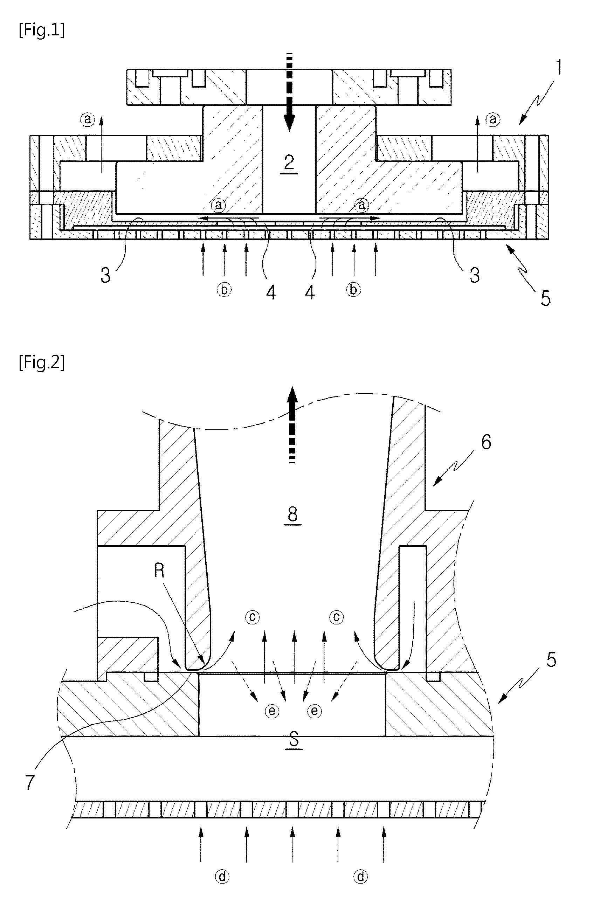

FIG. 1 shows a "cell-picker" disclosed in Korean Application Publication No. 2011-19881. The cell-picker includes a gripper body 1 that has both a supply passage 2 formed in the center of the picker and a discharge passage 3 extending radially outward from the lower end of the supply passage 2; and a suction plate 5 that is mounted to the lower end of the gripper body 1 that communicates with the discharge passage 3 through holes 4.

When compressed air is supplied downward through the supply passage 2 at a high speed and passes through the narrow discharge passage 3, air that has been charged in the interior apace of the suction plate 5 is introduced into the discharge passage 3 through the holes 4, and is expelled to the outside along with compressed air (see arrows ⓐ). Thus, a vacuum via negative pressure is produced in the interior space of the suction plate 5, so an object can be attached to the lower surface of the suction plate 5 by vacuum (see arrows ⓑ).

In the cell-picker, the gripper body 1 functions as a vacuum ejector. Accordingly, the cell-picker is advantageous in that the cell-picker may simplify the construction of the vacuum transfer system. Further, as disclosed in the publication, the cell-picker may be efficiently used to vacuum-grip thin and light objects, for example, solar cells. However, the cell-picker is problematic as follows.

First, in the cell-picker, at least some of the compressed air directly flows into the suction plate 5 through the holes 4, so the cell-picker is problematic in that the level of output vacuum is low compared to the amount of input compressed air; the speed to reach a desired level of vacuum is low; and the suction power for vacuum-gripping an object is low, but nevertheless, the cell-picket disclosed in the publication cannot solve these problems because it is almost impossible to design an improved structure of the cell-picker capable of solving the problems due to structural defects of the cell-picker.

Second, when supplied compressed air passes through the narrow discharge passage 3, the compressed air can expel air from the suction plate 5, so the cell-picker is problematic in that it is difficult to form the passage and the passage may be easily blocked by foreign substances; and when trying to enlarge the size of the discharge passage 3, the above-mentioned problem may become worse, so the structure of the cell-picker disclosed in the publication may not solve the problem.

FIG. 2 shows another vacuum gripping device (entitled "vacuum gripper") disclosed in US Patent Application Publication No. 2010/25905. The gripping device disclosed in the US publication has a structure similar to that of the above-mentioned cell-picker, in which the locations of the 'inlet' and the 'outlet' are oppositely changed from the above-mentioned cell-picker.

As shown in the drawing, when compressed air is supplied into a gripper body 6 at a high speed through a narrow supply passage 7 formed in the lower end of the sidewall of the gripper body 6, and then flows upward through a center discharge passage 8, air that has been charged in a suction plate 5 is introduced into the discharge passage 8, and is expelled to the outside along with the compressed air (see arrows ⓒ). Accordingly, a vacuum via negative pressure is produced in the interior space S of the suction plate 5, so an object can be attached to the lower surface of the plate 5 by vacuum (see arrows ⓓ).

In this gripping device, the gripper body 6 functions as a vacuum ejector. Accordingly, the gripping device is advantageous in that the gripping device may simplify the construction of the vacuum transfer system. However, in the structure of this gripping device, at least some of the supplied compressed air directly flows into the suction plate 5 in the same manner as that described for the cell-picker.

Further, as disclosed in the publication, the lower sleeve part of the gripper body 6 at which the supply passage 7 and the discharge passage 8 come into contact with each other is rounded to form a rounded part R, so compressed air may flow upward through the discharge passage 8. However, in this invention, currents of compressed air cannot be completely guided upward, but are simply diffused by the rounded part R. Further, when negative pressure is formed in the interior space S, the currents of compressed air may undesirably flow in a reverse direction (see arrows ⓔ).

Accordingly, this gripping device has the same problems of inefficiency like the cell-picker.

### Disclosure

### Technical Problem

Accordingly, the present invention has been made keeping in mind the above problems occurring in the related art vacuum gripping devices, and an object of the present invention is to provide a device for vacuum gripping that can be used to efficiently move thin and light objects.

Another object of the present invention is to provide a vacuum gripping device that can prevent forming of unnecessary currents of air in the device, thereby quickly and efficiently producing negative pressure in the device, and quickly and efficiently gripping an object.

### Technical Solution

A device for vacuum gripping according to the present invention:
a gripper body having a discharge line that extends from a suction throat formed in a bottom of the gripper body to an outlet formed in a sidewall or in a top wall of the gripper body via a discharge passage formed in the gripper body, and a supply line that extends from an inlet formed in a lower part of the sidewall to the suction throat via a supply passage;
a ring-shaped air guide combined with a lower part of the gripper body, the air guide having a center through hole, an edge of which is uplifted and is concentrically placed inside the suction throat such that the uplifted edge of the center through hole forms an upwardly inclined or upwardly rounded structure in a lower end of the supply line; and
a suction pad part placed below the air guide and provided with an air exhaust space therein, the air exhaust space communicating with the discharge passage of the gripper body via both the center through hole and the suction throat.

The discharge passage may have an enlarged interior space compared to the suction throat. Further, the supply passage may be configured to have a gradually increased diameter or may be embedded with a nozzle therein so as to form a shape formed by the gradually increased diameter.

### Advantageous Effects

In the vacuum gripping device according to the present invention, compressed air supplied at a high speed induces a pressure drop in the suction throat when the air flows upward through the discharge passage, thereby expelling air from the interior space of the suction pad part. Particularly, the air guide forcibly determines the flowing direction of compressed air, so the vacuum gripping device can prevent even a small amount of compressed air from undesirably flowing to the suction pad part. Accordingly, compared to related gripping devices, the vacuum gripping device of the present invention can more quickly and efficiently produce negative pressure in the device, and can more quickly and efficiently grip an object.

### Description of Drawings

FIG. 1 is a sectional view of a related art gripping device;
FIG. 2 is a sectional view of another related art gripping device;
FIG. 3 is a perspective view of a vacuum gripping device according to the present invention;
FIG. 4 is a sectional view taken along line A-A of FIG. 3; and
FIG. 5 is view illustrating an operation of the vacuum gripping device according to the present invention.

**<Description of the Reference Numerals in the Drawings>**

| | | | |
|---|---|---|---|
| 100: | vacuum gripping device | 10: | gripper body |
| 11: | suction throat | 12: | discharge passage |
| 13: | outlet | 14: | inlet |
| 15: | supply passage | 16. | Nozzle |
| 20: | air guide | 21: | center through hole |
| 22: | channel | 30: | suction pad part |
| 31: | air exhaust space | 32: | suction holes |
| 33: | plate | 34: | locking bolts |

### Best Mode

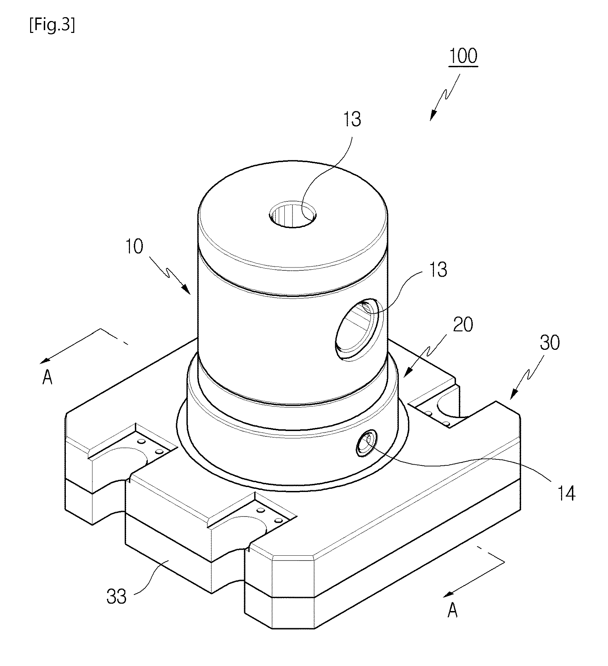

The above and other objects, features and advantages of the present invention will be more clearly understood from the following detailed description of an embodiment when taken in conjunction with the accompanying drawings. In the drawings of FIGS. 3 to 5, a vacuum gripping device according to the present invention is designated by a reference numeral 100.

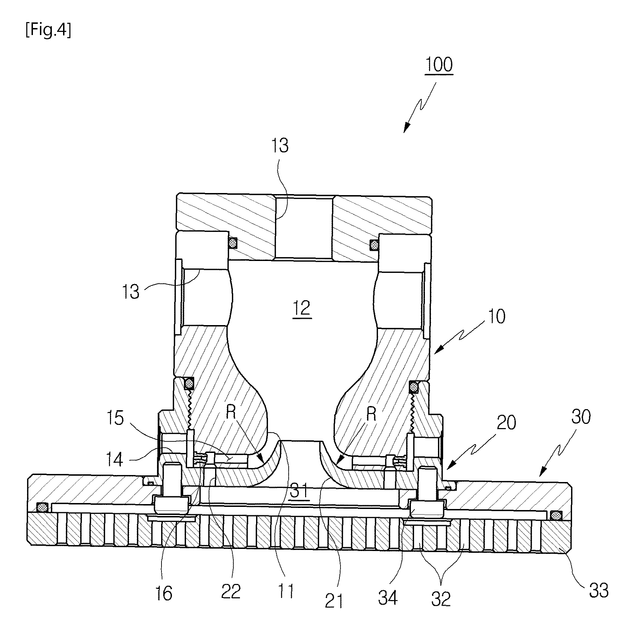

Referring to FIGS. 3 and 4, the vacuum gripping device 100 according to the present invention includes a gripper body 10, an air guide 20, and a suction pad part 30. Here, the air guide 20 is mounted to the lower end of the gripper body 10 by a screw-type engagement, and the suction pad part 30 is mounted to the lower end of the air guide 20 using locking bolts 34. Of course, in the present invention, the locking method is not limited to the above-mentioned methods.

The gripper body 10 includes both a supply line for supplying compressed air and a discharge line for discharging compressed air.

First, the discharge line is a continuous air passage line that continuously extends from a suction throat 11 formed in the bottom of the gripper body 10 to an outlet 13 formed in the sidewall or in the top wall of the gripper body via a discharge passage 12 formed in the center of the interior of the gripper body. As shown in the drawings, the interior space of the discharge passage 12 is gradually enlarged in an upward direction from the suction throat 11.

Second, the supply line is a continuous air passage line that continuously extends from an inlet 14 formed in a lower part of the sidewall of the gripper body 10 to the suction throat 11 of the discharge line via a supply passage 15 formed in the sidewall of the gripper body. Here, the supply passage 15 may be configured to have a gradually increased diameter or may be embedded with at least one nozzle 16 therein so as to form a shape formed by the gradually increased diameter.

In the gripper body 10, the number and locations of the inlet 14 and outlet 13, the shapes and diameters of the passages 12 and 15 may be freely and variously designed according to the size and weight of the vacuum gripping device 100 and according to the kind of objects to be held by the device. Further, the gradually enlarged shapes of the respective passages 12 and 15 are designed to increase the velocity and quantity of flow per unit time. Compared to straight passages, the gradually enlarged passages may more efficiently increase both the expected degree of vacuum and the speed to reach a desired degree of vacuum in the vacuum gripping device 100.

The air guide 20 is a ring-shaped unit that has a center through hole 21 in the center, and is placed in a way such that the air guide can realize a corresponding relationship with both the supply line and the discharge line of the gripper body 10. Described in detail, in the air guide 20, the edge of the center through hole 21 is uplifted and is concentrically placed inside the suction throat 11 such that the uplifted edge of the center through hole 21 forms an upwardly inclined or upwardly rounded structure R in the lower end of the supply line. In other words, due to the upwardly rounded structure R of the air guide 20, a lower end of the supply line can be connected to the discharge passage 12 in a state in which the lower end of the supply line is inclinedly upward.

The specifically designed shapes of both the air guide 20 and the supply line can forcibly determine the flowing directions of air currents, so the specifically designed shapes of both the air guide 20 and the supply line are substantially different from the structure of FIG. 2, in which the lower sleeve part of the gripper body 6 is simply rounded to form a rounded part R merely enabling diffusion of air currents.

Reference numeral 22 denotes a small-sized channel that is formed in the air guide 20 so as to communicate the supply passage 15 formed in an upper part with the air exhaust space 31 formed in a lower part. During an operation of the gripping device, air can be expelled from the suction pad part through the small-sized channel 22 and through the suction throat 11 that is a large-sized hole formed in the center of gripper body, so the present invention can efficiently increase both the expected degree of vacuum and the speed to reach a desired degree of vacuum in the vacuum gripping device.

The suction pad part 30 may be selected from typical suction pads having the air exhaust space 31 therein. The suction pad part 30 is mounted to the lower ends both of the gripper body 10 and of the air guide 20, in which the air exhaust space 31 formed in the pad part 30 communicates with the discharge passage 12 of the gripper body 10 via both the center through hole 21 and the suction throat 11. Here, reference numeral 34 denotes locking bolts that are used to lock the suction pad part 30 to the lower end of the air guide 20.

In the embodiment, the suction pad part 30 includes a lower plate 33 having a plurality of suction holes 32. Here, the suction holes 32 commonly communicate with the air exhaust space 31, thereby forming integrated one space in cooperation with the air exhaust space.

The plate 33 may be efficiently used to safely hold a thin object that is formed of an easily deformable material or to hold an object that should avoid being even minutely damaged. Further, the plate 33 provides a surface that comes into direct contact with an object, so it is preferable that the plate 33 be formed of PEEK (polyetheretherketone) resin or POM (polyoxymethylene) resin, booth being rigid materials inducing no static electricity in a solid state.

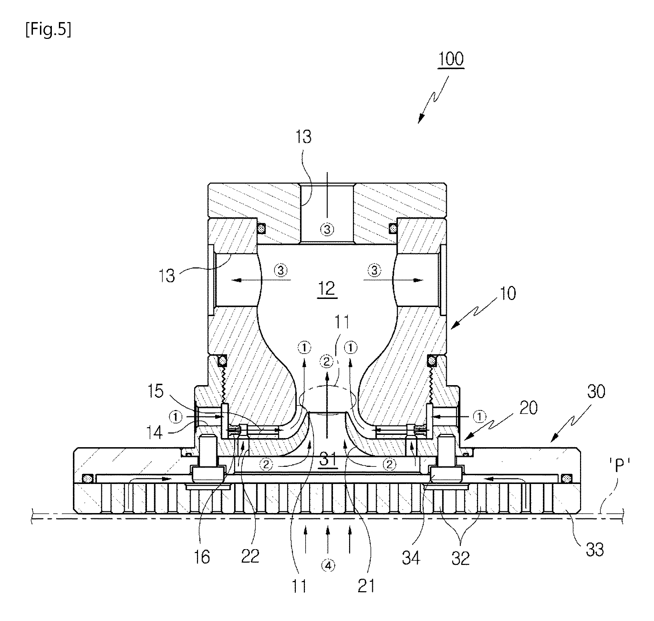

Referring to FIG. 5, the vacuum gripping device 100 of the present invention is operated using compressed air that is supplied at a high speed. First, when compressed air is supplied, the compressed air flows to the supply passage 15 of the gripper body 10 through the inlet 14, and collides on the rounded structure R of the air guide 20, so the compressed air flows upward through the discharge passage 12 (see arrows ①), and is discharged to the outside through the outlet 13 (see arrows ③).

Here, the present invention is characterized in that all the supplied compressed air is discharged to the outside after flowing upward through the discharge passage 12 by the function of the air guide 20 mounted to the lower end of the gripper body 10. In other words, in the present invention, the air guide 20 forcibly sets the flowing direction of compressed air to an "upward direction", so this invention can prevent even a small amount of compressed air from undesirably flowing downward to the air exhaust space 31 formed in the suction pad part 30.

As described above, during the air supplying and air discharging process, the pressure drop is concentrically generated both in the suction throat 11 of the discharge passage 12 and in the channel 22, so air that has been charged in the air exhaust space 31 of the suction pad part 30 is expelled into the discharge passage 12 through the center through hole 21 and through the suction throat 11 (see arrows ②), and is then discharged to the outside along with the compressed air via the outlet 13 (see arrows ③). When air is expelled from the suction pad part, the air is mainly discharged through the suction throat 11. However, in the present embodiment, the air is also expelled from the suction pad part through the channel 22.

In other words, air that has been expelled from the suction pad part through the channel 22 joins compressed air, so the amount of suction energy acting in the suction throat 11 is increased. Accordingly, the presence of the channel 22 in the vacuum gripping device of this invention provides advantages of increasing energy efficiency of the device.

## Claims

1. A device for vacuum gripping, comprising:
a gripper body having a discharge line that extends from a suction throat formed in a bottom of the gripper body to an outlet formed in a sidewall or in a top wall of the gripper body via a discharge passage formed in the gripper body, and a supply line that extends from an inlet formed in a lower part of the sidewall to the suction throat via a supply passage;
a ring-shaped air guide combined with a lower part of the gripper body, the air guide having a center through hole, an edge of which is uplifted and is concentrically placed inside the suction throat such that the uplifted edge of the center through hole forms an upwardly inclined or upwardly rounded structure in a lower end of the supply line; and
a suction pad part placed below the air guide and provided with an air exhaust space therein, the air exhaust space communicating with the discharge passage of the gripper body via both the center through hole and the suction throat.

2. The device for vacuum gripping as set forth in claim 1, wherein the supply passage has a gradually increased diameter or is embedded with a nozzle therein so as to form a shape formed by the gradually increased diameter.

3. The device for vacuum gripping as set forth in claim 1, wherein the air guide is provided with a channel that communicates the supply passage and the air exhaust space with each other.

4. The device for vacuum gripping as set forth in claim 1, wherein the suction pad part includes a lower plate having a plurality of suction holes, the suction holes commonly communicating with the air exhaust space, thereby forming one space in cooperation with the air exhaust space.

5. The device for vacuum gripping as set forth in claim 4, wherein the plate is formed through molding using PEEK (polyetheretherketone) resin or POM (polyoxymethylene) resin.
